# EUROPEAN PATENT APPLICATION

(11) **EP 3 578 230 A1**
(43) Date of publication of application: **11.12.2019**
(21) Application number: 18175726.1
(22) Date of filing: 04.06.2018
(51) Int. Cl.: A62B 9/02, A62B 18/10, F16K 15/14, F16K 15/18, F16K 31/00

(54) **VALVE AND AIR MASK**

(71) Applicant: Koninklijke Philips N.V., 5656 AE Eindhoven (NL)
(72) Inventor: KONG, Tao, 5656 AE Eindhoven (NL); CHEN, Weizhong, 5656 AE Eindhoven (NL)
(74) Representative: de Haan, Poul Erik

(57) **Abstract**

The invention provides a valve (12) comprising photoresponsive material (32) adapted to deform in response to exposure to electromagnetic radiation in such a way as to assist in urging the valve toward an open position. Accordingly, where the valve is incorporated in an air mask, the photoresponsive material allows the valve to more fully open during periods of exhalation, to thereby reduce breathing resistance.

## Description

### FIELD OF THE INVENTION

This invention relates to a valve, and to an air mask comprising the same.

### BACKGROUND OF THE INVENTION

Air masks (or breathing masks) are used in a range of industries, for filtering or purifying air being inhaled by a user.

For example, air pollution is a worldwide concern. The World Health Organization (WHO) estimates that 4 million people die from air pollution every year. Part of this problem is the outdoor air quality in cities. Nearly 300 smog-hit cities fail to meet national air quality standards.

Official outdoor air quality standards define particle matter concentration as mass concentration per unit volume (e.g. µg/m³). A particular concern is pollution with particles having a diameter less than 2.5 µm (termed "PM2.5") as they are able to penetrate into the gas exchange regions of the lung (alveoli), and very small particles (<100 nm) may pass through the lungs to affect other organs.

Since this problem will not improve significantly on a short time scale, a common way to deal with this problem is to wear a mask which provides cleaner air by filtration and the market for masks in China and elsewhere has seen a great surge in recent years. For example, it is estimated that by 2019, there will be 4.2 billion masks in China.

Air masks incorporate a valve for regulating flow of air and in and out for inhalation and exhalation. The valve is typically a check valve, permitting free outflow of air, for exhalation, but stopping any free inflow of air, such that all incoming air must pass through a filter.

The specifications of the valve have a critical impact on breathing resistance, and related comfort for a user. During exhalation, the check valve should be as fully open as possible to decrease breathing resistance. However, due to structural and material limitations of mask and valve arrangements, known valves are limited in the extent to which they are able to open during exhalation. Hence uncomfortable breathing resistance remains a problem in the state of the art.

Outside of the field of air masks, excessive flow resistance through valves such as check valves is a problem more generally.

Solutions previously proposed are often complex in terms of structure and manufacture, and, by consequence of this, also lack applicability across for instance different mask structures; solutions tend to be highly specialized to particular kinds and models of mask, and not useful for integration in any other kind of mask. This limits their applicability and increases cost, as different valves need to be created for different kinds of mask.

A simple solution is sought which is able to provide an improved valve which can offer reduced flow resistance, in particular for facilitating reduced breathing resistance in an air mask.

### SUMMARY OF THE INVENTION

The invention is defined by the claims.

According to an aspect of the invention, there is provided a valve having an open position and a closed position, the valve comprising a photoresponsive material adapted to deform in response to exposure to electromagnetic radiation, the material arranged such that said deformation is for assisting opening of the valve.

In particular, the material may be arranged such that said deformation induces urging of the valve in a direction toward the open position.

The invention is based on using deformation of photoresponsive materials to assist in opening the valve. In this way, the valve can be more fully opened during exhalation, reducing breathing resistance.

The invention relates to valves generally, but may find particularly advantageous application in an air mask. Hence, embodiments of the invention may provide an air mask valve.

Significant developments have recently been made in the field of photoresponsive materials, enabling them to provide large deformation and force from only a small body of material, thus allowing them to play a key role in helping to actuate opening of the valve, but without adding bulk, weight or complexity to the valve or mask.

The material can be selectively activated or deactivated through exposure to electromagnetic radiation such as light. Thus the material can be remotely activated, avoiding the need for connecting elements, such as wires or control lines, which would add complexity and reduce flexibility. Such control elements might otherwise make active assistance of opening impossible.

Photoresponsive materials are a highly reliable way of providing active mechanical assistance, since they depend only on intrinsic properties of the material. This makes them more dependable for instance than mechatronic or other mechanical actuators which might be used to assist in opening the valve, which rely on the functioning of electronic or mechanical components. The latter may develop faults, or wear over time. Photoresponsive materials have a long lifetime.

Avoiding electrical components in the body of the valve is also important for safety, to avoid electrocution, since the valve is positioned very close to the mouth of a user.

Photoresponsive materials can be easily integrated in the valve without increase in the size or power consumption of the valve or encompassing device (such as an air mask).

Photoresponsive materials offer very fast mechanical response which is important for instance in the context of air masks, where for comfortable breathing it is useful that the valve can react quickly to stimulation, to ensure opening and closing remains in synchrony with breathing rhythm.

Photoresponsive materials offer benefits compared to other conceivable responsive materials (e.g. electroactive materials) in that they do not substantively increase power consumption. They have faster response time than e.g. thermally activated responsive materials.

Preferably the photoresponsive material is arranged such that the deformation is for assisting in fully opening the valve, i.e. assisting in moving the valve to a fully open position.

In this case, the open position of the valve may be a fully open position, i.e. a maximally open position, beyond which the valve cannot be opened further. In this way, the deformation of the photoresponsive material may induce urging of the valve in a direction toward a fully open position.

Preferably, the valve is configured such that in use the deformation of the photoresponsive material assists in or contributes to moving the valve toward the open (preferably fully open) position.

Preferably the closed position is a fully closed position, a maximally closed position, beyond which the valve cannot be closed further, and in which the valve is sealed (shut).

The valve is preferably a check valve, i.e. a non-return valve or a one way valve; a valve which permits (gas) flow through it in only a single direction.

The valve may comprise a sealing element moveable relative to a valve seat to define the open position and closed position, and wherein said deformation of the photoresponsive material is arranged to induce urging of said sealing element.

The sealing element may for instance be a membrane (such as a diaphragm) which in the closed position seals against the valve seat to thereby close the valve.

Use of photoresponsive material enables simple passive mechanisms to be implemented for regulating activation of the material, and thus of an urging force induced by the material.

In at least one set of examples, at least a portion of the photoresponsive material may be arranged for exposure to electromagnetic radiation when the valve is away from the closed position, i.e. arranged exposed to any electromagnetic radiation which falls incident. In this way, when the valve begins to be pushed away from the closed position, e.g. by exhalation of air, the photoresponsive material becomes exposed to radiation (e.g. light), thereby triggering the active assistance provided by deformation of the material.

Preferably, the photoresponsive material is arranged shielded from exposure to any electromagnetic radiation when the valve is in the closed position. This feature may be advantageously combined with the above feature to provide an efficient passive mechanism for regulating activation of the photoresponsive material deformation. When the valve is closed, the photoresponsive material is shielded from radiation, such that it is in a non-deformed state and is not urging the valve toward the open potion. As soon as the valve begins to be opened e.g. by exhalation of the user, the material becomes exposed to any incident radiation (e.g. environmental light, or light provided by a dedicated source), thereby triggering deformation of the material which then provides an assisting force urging the valve more strongly toward the open position. When the valve is closed again, the deformation is again deactivated.

The valve may be adapted to be biased into the closed position in the absence of countervailing force. The valve may be for instance elastically biased into the closed position, or have a sealing element pre-stressed such that it is biased toward the closed position. Alternatively, there may be a biasing means, e.g. a spring or other elastic element, for biasing the valve into the closed position.

Embodiments may provide an air mask comprising a valve in accordance with any embodiment or example outlined above, or described below.

Preferably the valve of the air mask is configured such that exhalation of air, caused by the user when the user is wearing the air mask, through the valve contributes to opening the valve, e.g. contributes to urging of the valve toward the open position.

In accordance with one set of examples, an urging force created by the deformation of the photoresponsive material is insufficient alone to overcome said biasing of the valve into the closed position, such that in the absence in addition of exhalation of air through the valve, the valve is biased into the closed position.

This provides a simple passive mechanism for regulating the opening and closing of the valve with the assistance of the photoresponsive material. In the absence of exhalation force, the valve is biased closed. When the user begins to exhale, the valve is moved partly away from the closed position. Light can be received onto the photoresponsive material triggering deformation of the material, and thereby inducing urging of the valve in the direction toward the open position. This assists in pushing the valve toward the open position, such that the combination of exhalation and photoresponsive material deformation results in full opening of the valve. Once the user stops exhaling, the biasing force towards the closed position overcomes the photoresponsive material urging force, returning the valve to the closed position.

Further embodiments may provide a system comprising:
a valve as described in any of the examples above or in the descriptions to follow, or an air mask comprising such a valve, as discussed above or described below; and
an electromagnetic radiation source arranged for directing electromagnetic radiation onto the photoresponsive material.

The electromagnetic radiation source preferably has a controllable electromagnetic radiation output.

The electromagnetic radiation source may in examples be a light source. The light source may be a visible light source and/or an ultraviolet (UV) light source, or any other kind of light source.

The light source may in examples comprise an existing light source already situated in the locality of the valve, and whose light output is harvested by the valve for use in stimulating deformation. In the context of an air mask for instance, such masks, particularly actively assisted masks, often include a persistently illuminated status light (e.g. an LED). The light from this status light may be used for activating deformation of the photoresponsive material of the valve.

By providing a system with a light source, photo-stimulation of the photoresponsive material is enabled. However, provision of a radiation source is not essential to the inventive concept; use could be made of an auxiliary radiation source, for instance an environmental light source, or a light source provided by another external system or apparatus.

The system may comprise a controller configured to control a radiation output of the electromagnetic radiation source to thereby control deformation of the photoresponsive material (and hence the assistance in opening the valve, e.g. the urging of the valve toward the open position).

In accordance with one set of examples, the system may comprise means for determining an exhalation through the valve, and wherein the controller is adapted to control said radiation output based on the determined exhalation.

In particular, the system may comprise means for determining a pattern of exhalation through the valve, and wherein the controller is adapted to control said radiation output based on the determined pattern of exhalation. This may in particular be in the case in which the system comprises an air mask.

By controlling radiation output based on a determined exhalation through the valve, deformation of the photoresponsive material can be controlled to coincide with exhalation of the user. In this way, the urging of the valve toward the open position by the deformation is timed to occur at the times when opening of the valve is required, and preferably to deactivate at times when the valve should be closed (i.e. during inhalation).

The controller may be configured to control the radiation source such that the source generates a radiation output when air is being exhaled through the valve, and does not generate an output when air is not being exhaled through the valve.

In examples, the electromagnetic radiation source may be coupled to the mask. Alternatively, it may be remote from the mask. It may be arranged adjacent the valve. It may be arranged surrounding the valve.

In advantageous examples, the photoresponsive material may be a functionalized polymer, such as an azobenzene-functionalised polyamide. These materials are able to achieve large deformation and very strong photo-generated force output under exposure to light. The material has been tested in particular with 445 nm wavelength light.

Any other photoresponsive material may additionally or alternatively be used. Particular (non-limiting) examples include for instance single-walled nanotubes (SWNT), polycarbonate composites, graphene-elastin composites and/or graphene-carbon nanotube-PDMS (Polydimethylsiloxane) composites. Other suitable example photoresponsive materials will be apparent to the skilled person.

The concept of the present invention may be applied to valves generally, in any application. The inventive concept pertains to use of a photoresponsive material to assist in more fully opening a valve, regardless of the application. An advantageous set of embodiments may provide an air mask valve.

### BRIEF DESCRIPTION OF THE DRAWINGS

Examples of the invention will now be described in detail with reference to the accompanying drawings, in which:
Fig. 1 shows a known valve;
Fig. 2 illustrates example photoresponsive materials and exhibited deformation responses;
Fig. 3 illustrates an example valve according to an embodiment;
Fig. 4 illustrates an example air mask; and
Fig. 5 illustrates an example system including a valve according to an embodiment.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a valve comprising photoresponsive material adapted to deform in response to exposure to electromagnetic radiation in such a way as to assist in urging the valve toward an open position. Accordingly, when the valve is used in particular for an air mask, the photoresponsive material allows the valve to more fully open during periods of exhalation, to thereby reduce breathing resistance.

The photoresponsive material effectively provides an actuation function, assisting in opening the valve. Use of photoresponsive material in particular carries the advantage of allowing deformation, and thereby assistance in opening the valve, to be controlled by means remote to the valve and potentially even the mask carrying it. This brings advantages with regards simplicity of structure and function of the valve, since control lines and other associated electrical components do not need to be incorporated directly into the valve.

The invention pertains to valves in general for any application. The valve finds particularly advantageous application for use in air masks. Example valves according to the invention will be described below in the context in particular of their use for air masks. However, it is to be understood in each case that the valves described may in further examples be used for regulating fluid flow in any other context or application. Use in an air mask represents simply one advantageous application by way of which the benefits of the inventive concept may be explained and illustrated.

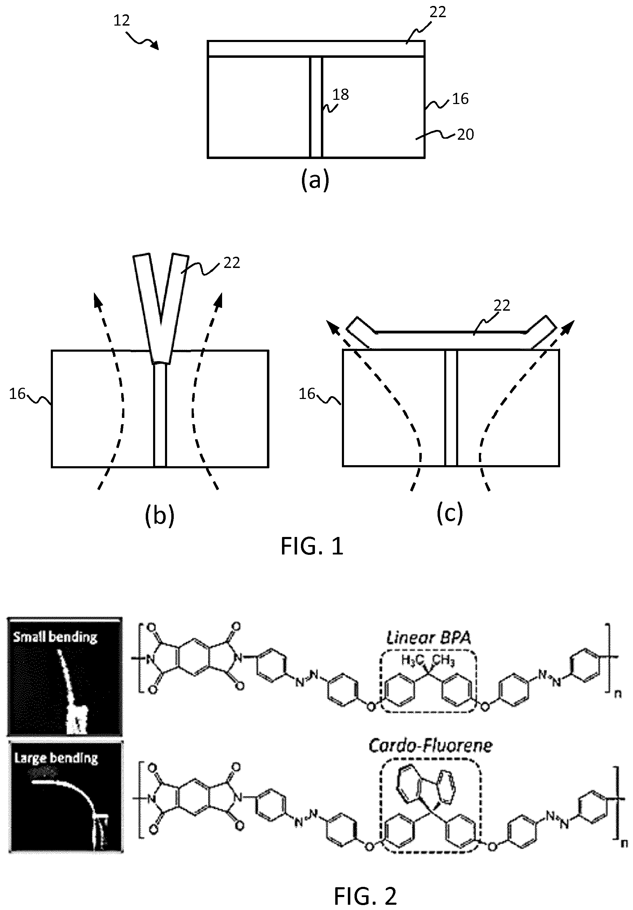

An air mask check valve is a key component in both active and passive masks. The check valve regulates air flow into (inhalation) or out of (exhalation) the mask. The valve is flow sensitive, relying upon the pressure of inhaled and exhaled air to open and close the valve. An example of a known air mask check valve is shown in Fig. 1. The valve 12 comprises a sealing element in the form of a diaphragm 22 which is held by a valve housing or holder 16, supported by a central pillar 18. The diaphragm comprises a flexible rubber or silica gel body which in a resting position sits against an upper rim or flange of the housing 16 (which provides a valve seat) to thereby close the valve. Fig. 1(a) shows the valve in a closed position.

In a normal resting state, the valve is biased closed; air pressure on the upstream side must be larger than the pressure on the downstream side for the check valve to open. The valve is configured such that exhalation of air through the air flow passage 20 of the valve is sufficient to open the valve.

In an ideal case, the valve should be fully opened during exhalation, such that breathing resistance (i.e. resistance against exhalation) is minimized. This maximizes comfort for a user and allows them to breathe more easily and more efficiently. Fig. 1(b) shows the valve 12 in an ideal fully open state.

However, tests by the inventors have shown that known valves are not able to achieve a fully open ideal state due to structural and material constraints of the valve structure. In particular, internal material resistance (biasing) against opening of the valve (realised for instance through a high elastic modulus of the valve) limits the extent to which the valve can be forced open by pressure of exhalation alone. Additionally, the coupling of the diaphragm 22 with the central pillar 18 (necessary for structural support and stability) imposes a further structural constraint on 'upward' (in the context of Fig. 1) flexibility of the diaphragm. Consequently, known valves are typically only able to achieve partial opening, as illustrated for instance in Fig. 1(c). This limits inward airflow, and increases breathing resistance.

Various workarounds have been developed to attempt to improve breathing resistance. But these are typically structurally complex and highly specific to the structure of each particular mask incorporating them. Transferability of one valve solution to a different mask is typically poor, meaning that known approaches are of limited applicability.

The present invention proposes integration of photoresponsive material (PRM) in the valve design to address the above problem. This implements active mechanical assistance, allowing wider opening of the valve, but without the associated structural and functional complexity of e.g. mechatronic actuator components which may previously have dissuaded use of active solutions.

Photoresponsive materials (PRM), especially photomechanical materials, are a group of materials which possess the property of deforming in response to exposure to certain light.

By way of example, in tests, a polymer film was prepared by thermal polymerization of a liquid crystalline monomer and a diacrylate crosslinker both of which possessed azobenzene moieties. Upon exposure to ultraviolet (UV) light (wavelength 366 nm), the prepared film bent towards the direction of light with the bending occurring in a direction parallel to the direction of light polarization. Upon subsequent exposure of the bent film to visible light (wavelength 540 nm), the film was able to recover its initial flat state. Means for preparing this material are described in detail in Nature 2003, 425, 145-145.

A further example group of photoresponsive materials are azobenzene-functionalized polyimides. These show large deformation and very strong photo-generated force output in response to light exposure. In particular, in one example, a series of linear polyimide materials has been developed, prepared with a bulky substituent incorporated via the development of a new bis(azobenzene-diamine) monomer containing a 9,9-diphenylfluorene cardo structure. These exhibit very strong photomechanical response under exposure to 445 nm wavelength light. These materials and the bending they are able to produce are illustrated in Fig. 2. The preparation and properties of these materials are described in ACS Macro Lett., 2017, 6, 1432-1437.

These developments provide advantageous examples of materials suitable for use in valves according to embodiments of the present invention.

As outlined above, additionally or alternatively, any other photoresponsive material may be used. Particular (non-limiting) examples include for instance single-walled nanotubes (SWNT), polycarbonate composites, graphene-elastin composites and/or graphene-carbon nanotube-PDMS (Polydimethylsiloxane) composites. Other suitable example photoresponsive materials will be apparent to the skilled person.

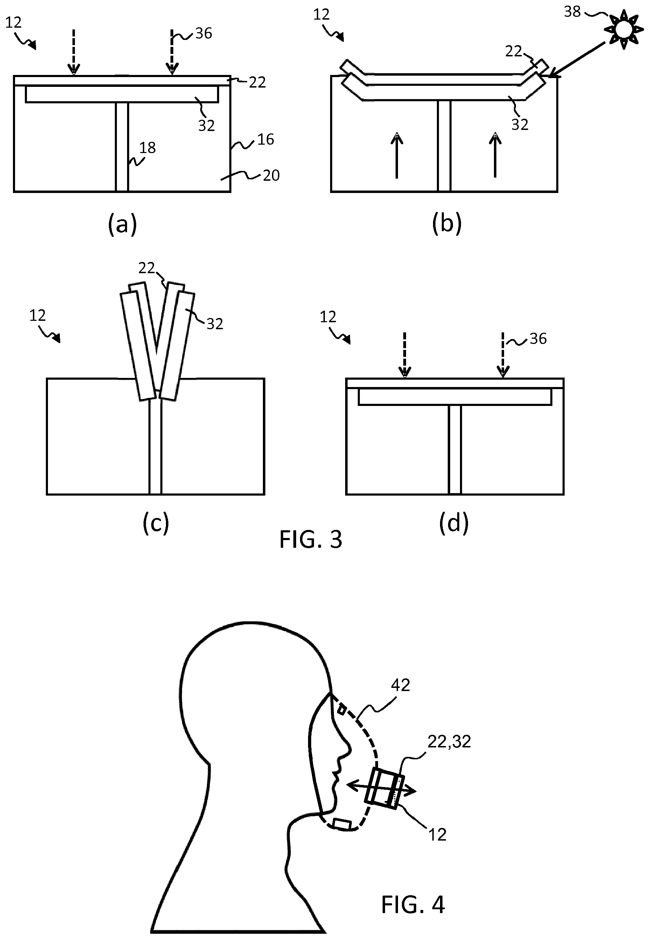

An example valve 12 in accordance with one or more embodiments of the present invention is shown in Fig. 3. The valve comprises a valve housing or holder 16 defining an air flow channel 20 extending from a lower end of the housing to an upper end of the housing. The upper and lower ends of the housing are open to permit flow of air or other fluid. A flexible membrane (known as a diaphragm) 22 extends across the open upper end of the housing, supported by a central wall or pillar 18 of the housing. The diaphragm provides a sealing element moveable relative to the housing to define an open and closed position of the valve.

Fig. 3(a) shows the valve in a closed position, in which the diaphragm is in a flat state and is sealed against a valve seat provided at the top of the housing. The seat may for instance be provided by a lip or flange extending around a periphery of the top wall of the housing. Fig. 3(b) shows the valve in a partially open position, in which edges of the diaphragm have flexed away from the periphery of the housing, to thereby partially open (unseal) the valve and allow passage of air out of the valve.

A layer of photoelectric material 32 is provided coupled to the sealing diaphragm (sealing element) 22. In this example, the layer of material is provided coupled to a lower or under surface of the diaphragm. The diaphragm thereby covers the layer of photoelectric material. The layer of photoelectric material provides an urging element for actively urging the diaphragm away from the closed position and toward an open position upon deformation in response to exposure to light.

An electromagnetic radiation source in the form of a light source 38 is arranged in optical communication with the valve 12. The light source may be provided in combination with the valve as part of a system. Alternatively, the light source may be an auxiliary light source, for instance an environmental light source (such as the sun) or a light source provided for illuminating a room in which the valve is being used.

The valve 12 is suitable for use in an air mask and permits regulating of flow of air in and out of the mask during breathing. The valve is in this example a check valve and is configured to permit air to flow out of the mask through the valve during exhalation, to prevent inward flow through the valve during inhalation. This ensures that for inhalation, air must instead flow through a filter of the mask.

Operation of the valve in use, in particular in the context of an air mask is illustrated by Figs. 3(a)-(d). However, the valve may also be used in other applications. Fig. 3(a) shows the valve 12 in a closed position. The valve should be closed during inhalation of a user. In the closed position, the sealing element 22 (diaphragm) is in a flat state and engages with the housing in a sealing manner such as to close the air passage 20 extending through the housing. In this state, no air can pass through the valve.

In the closed state, the sealing element 22 is arranged to shield the photoresponsive material urging element 32 from any incident light 36. The sealing element may for instance be opaque, to prevent transmission of light through the body of the sealing element to the photoresponsive material. Alternatively, there may be provided a light blocking shielding layer extending across the bottom or top surface of the sealing element to prevent transmission of light to the photoresponsive material.

During exhalation, air flows through the valve 12 toward the upper sealing element 22 as shown in Fig. 3(b). The pressure of the exhaled air urges at least one or more peripheral portions of the sealing diaphragm to lift away from periphery of the housing, thereby partially opening the valve and permitting passage of exhaled air from inside the mask and valve to outside. The air may flow through a filter optionally arranged across the upper open end of the valve.

With the valve urged into a partially open state by the pressure of exhalation, the photoresponsive material urging element 32 becomes partially exposed to light from the light source 38. This exposure to light triggers a deformation of the photoresponsive material. The photoresponsive material layer is arranged such that the deformation induces urging of the sealing diaphragm 22 toward a more fully open positon. In particular, the photoresponsive material bears against the sealing diaphragm and exerts an urging force on the diaphragm in a direction toward a fully open position. As a consequence, the sealing diaphragm is moved by the photoresponsive material substantially to the fully open position as shown in Fig. 3(c). The fully open position is the position in which the sealing diaphragm cannot be further opened; the valve is in a maximally open position. The photoresponsive material thus assists in more fully opening the valve during exhalation. In this position, breathing resistance is minimized.

It is not essential that the photoresponsive material move the valve all the way to the fully open position, only that it urge the valve in the direction of the fully open position to assist in achieving a more fully open position than otherwise would be achieved.

During inhalation, the valve should be once again in a closed position. The transition to the closed state can be implemented in a number of different ways.

In accordance with a simple example, the sealing element 22 is biased toward the closed position by a bias force or stress sufficient to overcome the maximal urging force exerted by the photoresponsive material urging element 32 alone. In this way, once the user ceases to exhale, the force exerted against the sealing element by the photoresponsive material element 32 is insufficient to prevent the sealing element from returning to the closed position, and hence closure of the valve. However, the return bias force or stress of the sealing element is configured such that it is insufficient to overcome the combined force of the deformed photoresponsive urging element and exhaled breath of the user. In this way, during exhalation, the combined force of exhalation and deformation of the photoresponsive material pushes the valve toward the fully open position.

The biasing of the sealing diaphragm 22 maybe implemented in different ways. The sealing diaphragm may be elastically biased toward the closed position. The material itself may for instance be elastically pre-strained so as to be biased toward the closed position. Alternatively, the sealing diaphragm may be coupled to a carrier layer which is pre-stressed to provide a bias of the diaphragm toward the closed position. The diaphragm may additionally or alternatively be configured to take advantage of gravity to assist in closing the sealing diaphragm.

Active solutions are also possible for ensuring re-closure of the valve upon cessation of exhalation, which are based on active control of the light source 38. These will be described in more detail below in further examples below.

The sealing element (diaphragm) 22 is a flexible membrane. It is formed by a layer of flexible material, for instance rubber or silica gel. However, any flexible material may be used. The sealing element for the above example is laminar in form. The sealing diaphragm, in the closed state, extends across the entire extent of the air flow channel formed through the valve housing. The diaphragm is secured to the housing by a central pillar or wall 18 extending through the length of the housing from a lower end to an upper end. The diaphragm curls upward from the closed (flat) state and the open (upwardly directed) state.

In the above example, the valve housing has a closed round cross-section, for instance circular, or oval. However, in other examples, the valve may have a different cross-sectional shape, for instance oblong or square or any other shape.

The valve housing or holder 16 may take any suitable form. Housings or holders known from existing air mask valves may be used for example.

Although in the above example, the valve 12 comprises a layer of photoresponsive material 32 which forms an urging element, in other examples, the photoresponsive material may be incorporated in the valve in a different way. In some examples, the sealing element (diaphragm) 22 itself may comprise the photoresponsive material. The photoresponsive material may be a layer or other body of photoresponsive material integrally incorporated in the sealing element.

The sealing element may be formed of the photoresponsive material. The sealing element may be formed of a composite material comprising a photoresponsive material as a component. There may optionally in either of these cases be provided an additional shielding element for shielding the photoresponsive material of the sealing element from electromagnetic radiation when the valve is in the closed position.

Although in the above example, the valve is configured such that the photoresponsive material is shielded from light when the valve is in the closed position and arranged for exposure to light when away from the closed position, this is not essential. In other examples, the photoresponsive material may be exposed to light at all times. In these cases, control of deformation and non-deformation of the material may, by way of example, be fully determined by control of a light source providing light onto the photoresponsive material. This will be explained in more detail below. It may alternatively be regulated by appropriate weighting of a bias of the sealing element toward the closed position, as described above.

In accordance with a further aspect of the invention, there is provided an air mask comprising a valve as described in any of the embodiments or examples outlined in this disclosure. The mask may be an active or passive mask. A passive mask is a mask which filters air in a passive manner, by passing inhaled and/or exhaled air through a filter, driven purely by the breathing effort of a user.

The invention is also applicable to active masks. Active masks may make use of a fan to assist in filtration. In particular, to improve comfort and effectiveness, a fan can be added to the mask which draws in air through the filter. For efficiency and longevity reasons these are normally electrically commutated brushless DC fans.

The benefit to the wearer of using a powered mask is that the lungs are relieved of the slight strain caused by inhalation against the resistance of the filters in a conventional non-powered mask.

Furthermore, in a conventional non-powered mask, inhalation also causes a slight negative pressure within the mask which leads to leakage of the contaminants into the mask, which leakage could prove dangerous if these are toxic substances. A powered mask delivers a steady stream of air to the face and may for example provide a slight positive pressure, which may be determined by the resistance of an exhale valve, to ensure that any leakage is outward rather than inward.

Fan assisted masks thus may improve the wearing comfort by reducing the temperature, humidity and breathing resistance. Fan assisted masks may be provided with an inhale fan or an exhale fan or both. An inhale fan assists in drawing air through a filter and enables a positive mask pressure to be obtained to prevent contaminants leaking into the mask volume. An exhale fan assists in the mask ventilation and ensures the breathed out carbon dioxide is fully expelled.

The valve according to embodiments of the present invention can be used in any example breathing mask for regulating the inhaled and exhaled flows of air.

An example mask 42 incorporating a valve 12 according to the invention is schematically depicted in Fig. 4. The mask shown by way of example is a passive mask.

In accordance with a further aspect of the invention, there is provided a system 52 comprising a valve 12 or air mask 42 in accordance with any of the examples of the invention outlined above or below, and an electromagnetic radiation source 38 arranged for providing electromagnetic radiation onto the photoresponsive material 32. Accordingly a dedicated radiation source is provided for stimulating deformation of the photoresponsive material. The radiation source is preferably a light source, e.g. a visible light source or an ultraviolet light source. The radiation source may be capable of emitting radiation outputs of a range of different wavelengths. The source may for instance comprise an assembly of radiation sources (e.g. light sources), each capable of emitting a different wavelength of electromagnetic radiation (e.g. light).

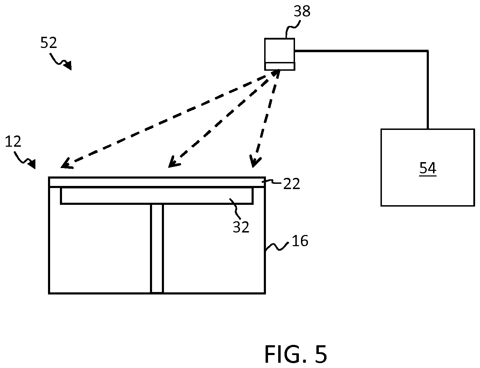

An example system 52 is illustrated in Fig. 5. The system comprises a valve 12 in accordance with any example or embodiment outlined in this disclosure, and a light source 38 arranged to direct illumination onto the valve (e.g. when the valve is in an at least partially open state). The light source is operatively coupled to a controller 54 configured to control a radiation output of the electromagnetic radiation source 38. The system is hence able to actively control supply of light to the valve, and hence control deformation of the photoresponsive material and thus control the active urging of the valve 12 toward the open position.

In accordance with one advantageous set of examples, the controller 52 may be adapted to control the light source 38 based on breathing rhythm of a user. In this example, means is provided to detect or determine a breathing or exhalation/inhalation pattern of a user, and the controller is adapted to control the light source 38 to be active when the user is exhaling and non-active when the user is inhaling. In this way, light is only supplied toward the photoactive material during exhalation, when active urging of the valve 12 toward the open position is desired. During this time, the material is photo-stimulated, such as to be in a deformed state, during which urging of the valve is applied.

During times of inhalation, the light source is switched off. In the absence of light the photoresponsive material returns to a non-deformed state and urging of the valve is removed. If the sealing diaphragm is biased toward the closed position (e.g. elastically biased), then in the absence of the active urging by the photoresponsive material, the valve returns to the closed state. Hence, during inhalation, the valve is closed.

Alternatively, the controller 52 maybe adapted to adjust an intensity of a light output of the light source 38 based on the determined exhalation pattern. For instance, the light source may be controlled to exhibit a low intensity during inhalation and a high intensity during exhalation.

To determine the exhalation pattern, the system may comprise a dedicated sensor to sense inhalation and exhalation. This may be incorporated in the valve 12, and operate based on sensed air movement or pressure. The sensor may be incorporated in an air mask 42 comprising the sensor. Alternatively, more indirect means may be provided to determine inhalation/exhalation pattern or rhythm, for instance a PPG sensor, signal outputs of which allow sensing of blood oxygen levels, from which inhalation and exhalation timings can be derived. Movement sensors applied to the chest might also be used for instance. Any suitable means may additionally or alternatively be used for determining the exhalation pattern.

The light source 38 is selected so as to generate a light output to which the photoresponsive material is sensitive. Different materials may be sensitive to different wavelengths or spectra of light.

Any kind of light source 38 maybe used. Advantageously, a solid state light source such as an LED may be used. These are low power, high reliability, long lifetime, capable of fast switching, and generate relatively little heat. Alternatively, any other kind of light source may be used, for instance an incandescent light source.

Although in the example above the light source 3 8 is controlled by a controller 52, a controller is optional. A light source maybe provided arranged to provide a continuous light output, without active control. In this case, controlling the re-closure of the valve may be performed using a passive means such as appropriately weighted biasing of the sealing diaphragm 22 as described above.

A light source 38 is provided in the above example. This may be a visible light source or an ultraviolet light source or an infrared light source for example. According to other examples, any other kind of electromagnetic radiation source may instead be provided, adapted to generate electromagnetic radiation of any wavelength. As noted, the wavelength of the radiation output of the radiation source should be chosen to match the radiation to which the photoresponsive material is sensitive.

Examples of suitable photoresponsive materials for use in valves according to the invention have been discussed above, and include by way of example functionalized polymers such as azobenzene functionalized polyimide.

Fabrication of a sealing diaphragm structure 22 such as that shown in Fig. 3, comprising a body of photoresponsive material coupled to the diaphragm will now be described. By way of one example, a layer of photoresponsive material may simply be applied to an already fabricated (e.g. air mask) valve diaphragm. Several methods can be used to achieve this, for example spin coating the diaphragm with photoresponsive material, in-situ deposition of photoresponsive material onto a surface of the diaphragm, or simple adhesion of a layer of photoresponsive material to a flexible diaphragm layer (e.g. a rubber or silica gel layer).

A spin coating method is able to achieve a thin, evenly distributed layer of photoresponsive material. In a spin coating method a quantity of photoresponsive material (PRM) is first deposited onto a surface of an already fabricated sealing diaphragm 22. The diaphragm is spun to spread and evenly distribute the PRM across the diaphragm. This results in a diaphragm structure comprising a coupled layer of PRM.

Although particular embodiments the present application have been explained with reference to and in the context of an air mask valve, the concept may be applied to valves more generally, in any application. The inventive concept pertains to use of a photoresponsive material to assist in more fully opening a check valve, regardless of the application.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A valve (12) having an open position and a closed position, the valve comprising a photoresponsive material (32) adapted to deform in response to exposure to electromagnetic radiation, the material arranged such that said deformation is for assisting opening of the valve.

2. A valve (12) as claimed in claim 1, wherein the photoresponsive material is arranged such that said deformation is for assisting fully opening the valve.

3. A valve (12) as claimed in any preceding claim, wherein the valve comprises a sealing element (22) moveable relative to a valve seat to define the open position and closed position, and wherein said deformation of the photoresponsive material (32) is arranged to induce urging of said sealing element.

4. A valve (12) as claimed in any preceding claim, wherein at least a portion of the photoresponsive material (32) is arranged for exposure to electromagnetic radiation when the valve is away from the closed position.

5. A valve (12) as claimed in any preceding claim, wherein the photoresponsive material (32) is arranged shielded from exposure to any electromagnetic radiation when the valve is in the closed position.

6. A valve (12) as claimed in any preceding claim, wherein the valve comprises an urging element (32) comprising the photoresponsive material (32), the urging element arranged to urge the sealing element (22) toward the open position in response to deformation of the photoresponsive material.

7. A valve (12) as claimed in any preceding claim, wherein the valve is an air mask valve.

8. A valve (12) as claimed in any preceding claim, wherein the valve is adapted to be biased into the closed position in the absence of countervailing force.

9. An air mask (42) comprising a valve (12) as claimed in any preceding claim.

10. An air mask (42) as claimed in claim 9, wherein the valve (12) is configured such that exhalation of air through the valve contributes to opening the valve.

11. An air mask (42) as claimed in claim 10, wherein the valve is adapted to be biased into the closed position in the absence of countervailing force, and wherein an urging force created by the deformation of the photoresponsive material (32) is insufficient alone to overcome the biasing of the valve into the closed position, such that in the absence in addition of exhalation of air through the valve, the valve is biased into the closed position.

12. A system (52) comprising:
a valve (12) as claimed in any of claims 1 to 8 or an air mask (42) as claimed in any of claims 9 to 11; and
an electromagnetic radiation source (38) arranged for directing electromagnetic radiation onto the photoresponsive material (32).

13. A system (52) as claimed in claim 12, further comprising a controller (54) configured to control a radiation output of the electromagnetic radiation source (38) to thereby control deformation of the photoresponsive material (32).

14. A system (52) as claimed in claim 13, the system comprising an air mask as claimed in any of claims 9 to 11, and wherein the system comprises means for determining an exhalation through the valve (12), and wherein the controller (54) is adapted to control said radiation output based on the determined exhalation.

15. A system (52) as claimed in claim 14, wherein the controller (54) is configured to control the radiation source (38) such that the source generates a radiation output when air is being exhaled through the valve (12), and does not generate an output when air is not being exhaled through the valve.
